# EUROPÄISCHE PATENTSCHRIFT

(11) **EP 1 297 332 B1**
(45) Veröffentlichungstag und Bekanntmachung des Hinweises auf die Patenterteilung: **22.07.2009**
(21) Anmeldenummer: 01933969.6
(22) Anmeldetag: 16.05.2001
(51) Int. Cl.: B01J 20/26, B01J 20/291, G01N 30/56

(54) **VERFAHREN ZUR HERSTELLUNG VON MONOLITHISCHEN CHROMATOGRAPHIESÄULEN**
METHOD FOR PRODUCING MONOLITHIC CHROMATOGRAPHY COLUMNS
PROCEDE DE PREPARATION DE COLONNES DE CHROMATOGRAPHIE MONOLITHIQUES

(30) Priorität: 14.06.2000 DE 10028447
(43) Veröffentlichungstag der Anmeldung: 02.04.2003
(73) Patentinhaber: Merck Patent GmbH, 64293 Darmstadt (DE)
(72) Erfinder: LUBDA, Dieter, 64625 Bensheim (DE); MÜLLER, Egbert, 64291 Darmstadt (DE)
(86) Internationale Anmeldenummer: PCT/EP2001/005540
(87) Internationale Veröffentlichungsnummer: WO 2001/096858

(56) Entgegenhaltungen:
- WO-A-95/03256
- WO-A-98/59238
- ISHIZUKA N ET AL: "Designing monolithic double-pore silica for high-speed liquid chromatography" JOURNAL OF CHROMATOGRAPHY A, ELSEVIER SCIENCE, NL, Bd. 797, Nr. 1-2, 27. Februar 1998 (1998-02-27), Seiten 133-137, XP004109779 ISSN: 0021-9673
- TANG Q ET AL: "Column technology for capillary electrochromatography" TRAC, TRENDS IN ANALYTICAL CHEMISTRY, ANALYTICAL CHEMISTRY. CAMBRIDGE, GB, Bd. 19, Nr. 11, November 2000 (2000-11), Seiten 648-663, XP004238608 ISSN: 0165-9936

## Beschreibung

Die Erfindung betrifft ein Verfahren zur Herstellung von Chromatographiesäulen oder Kapillaren mit monolithischen Sorbenzien, die nach der Herstellung direkt in ihrer Gelierform verbleiben können.

Monolithische Sorbenzien gewinnen im Bereich der Chromatographie, insbesondere der HPLC, Mikro-LC oder der Elektrochromatographie, immer mehr an Bedeutung. Sie zeigen wesentlich bessere Massentransporteigenschaften als Säulen oder Kapillaren mit partikulären Sorbenzien. Aus diesem Grund können Säulen mit monolithischen Sorbenzien mit höherer linearer Fließgeschwindigkeit bei gleichbleibender Leistung betrieben werden.

Monolithische Sorbenzien können auf Basis von organischen oder anorganischen Polymeren gebildet werden. Aufgrund der unterschiedlichen Eigenschaften der Polymere werden derzeit zur Herstellung von Chromatographiesäulen auf Basis von monolithischen Sorbenzien unterschiedliche Verfahren eingesetzt.

Polymere mit geringen Schrumpfungsraten, d.h. weiche Polymergele, können direkt in den zur Chromatographie verwendeten Rohren als Gelierform hergestellt werden. Hjerten et al. (Nature, 356, S. 810-811, 1992) beschreiben z.B. Monolithen aus einem Polyacrylamid-Material, die innerhalb eines chromatographischen Rohres hergestellt werden. Frechet et al. (Anal. Chem., 64, S 820-822, 1993) beschreiben die Herstellung von Polyacrylat-Materialien und Polystyrol/Divinylbenzol Copolymeren, die in Anwesenheit von Porogenen zu monolithischen Materialien mit einer makroporösen Struktur werden und nach der Herstellung in der verwendeten Form verbleiben können.

Derartige Polymere weisen jedoch für die Chromatographie einige Nachteile auf. Beispielsweise besitzen sie häufig eine zu geringe mechanische, Stabilität. Weiterhin ist die Porenverteilung der Materialien oft ungünstig, da zu viele Mikroporen auftreten. Dadurch wird die Effizienz und die Symmetrie der Säulen negativ beeinflußt. Auch zeigen die Materialien oft ein ungünstiges Quellverhalten.

Wesentlich bessere Trenneigenschaften zeigen monolithische poröse anorganische Formkörper oder, in einigen Fällen, stark quervernetzte, harte organische Polymergele. Diese Materialien schrumpfen jedoch während ihrer Herstellung, so daß sie nicht direkt in den Chromatographierohren hergestellt werden können. Das entstehende Totvolumen würde die Trennleistung zu stark herabsetzen. Bei anorganischen Monolithen, die über einen Sol-Gel Prozeß hergestellt werden, beträgt die Schrumpfung nach der Alterung beispielsweise bis zu 20% des Ausgangsdurchmessers. Daher müssen die Materialien nach ihrer Herstellung aus den Gelierformen entfernt werden und anschließend mit dicht-schließenden Rohren ummantelt werden.

WO 99/38006 und WO 99/50654 offenbaren Verfahren zur Herstellung von Kapillaren, die mit monolithischem Silica-Material gefüllt sind. Dieses Material kann nach der Herstellung direkt in der Kapillare verbleiben. Jedoch sind die dort offenbarten Methoden nur zur Herstellung von Kapillarsäulen mit kleinerem Durchmesser geeignet.

Aufgabe der vorliegenden Erfindung war es daher, ein Verfahren zur Herstellung von monolithischen Chromatographiesäulen bereitzustellen, bei dem das Sorbens nach der Herstellung in der Gelierform, d.h. dem Säulenrohr, verbleiben kann. Das Verfahren sollte insbesondere für stark schrumpfende, d.h. z.B. für anorganische Materialien und stark vernetzte organische Polymere, geeignet sein und das Füllen von Säulenrohren mit einem Durchmesser von bis zu 20 cm ermöglichen.

Es wurde gefunden, daß das Totvolumen, das durch die Schrumpfung zwischen Gelierform und Monolith entsteht, ausgeglichen werden kann, indem eine Mehrfachfüllung mit dem Monomersol durchgeführt wird. Auf diese Weise kann der Monolith in der ursprünglichen Form verbleiben und direkt zur chromatographischen Trennung eingesetzt werden. Obwohl das Gel nach der ersten Alterung im Vergleich zu dem frisch polymerisierten bzw. gelierten Material ein stärker fixiertes dreidimensionales Netzwerk besitzt, wurde gefunden, daß das Gel in diesem Stadium noch reaktiv genug ist, um sich mit frisch aufgegebenem Monomersol zu verankern. Dies geschieht durch neue Gelierung des Monomersols an das gealterte Gel.

Nach Lehrbuchmeinung (Iler, R. K. The chemistry of silica; John Wiley & Sons, New York, 1979, Seite 174) bilden sich homogene Netzwerke bei Kieselgelen nur bei einem pH - Wert unterhalb von pH 7. Oberhalb dieses Wertes ist die Neigung zur Bildung von Partikeln deutlich stärker ausgeprägt. Demnach findet auch die Herstellung von Monolithen aus Kieselgelen in saurem Medium statt. Die nachfolgende Alterung muß jedoch alkalisch erfolgen, damit sich poröse Strukturen bilden. Daher besitzt ein gealtertes Gel einen pH von ca. 9. Es wurde nun gefunden, daß auch bei der Herstellung von Monolithen aus Silika eine Mehrfachfüllung möglich ist. Die Neigung des Monomersols, im basischen Milieu Partikel auszubilden, kann unterdrückt werden. Trotz des hohen pH-Wertes der ersten Füllung nach der Alterung bildet sich bei der Mehrfachfüllung ein homogenes Netzwerk aus, wenn in den frisch gealterten Monolithen durch Ansäuern oder Spülen der äußeren Bereiche ein pH-Gradient erzeugt wird.

Das hinzugegebene Monomersol verbindet sich mit dem gealterten Gel und bildet mit diesem zusammen eine homogene Struktur. Die entstehenden Materialien zeigen gute chromatographische Trenneigenschaften.

Gegenstand der vorliegenden Erfindung ist daher ein Verfahren zur Herstellung von monolithischen porösen Formkörpern, die ihre Gelierform vollständig ausfüllen, gekennzeichnet durch folgende Verfahrensschritte:
a) Bereitstellen einer Gelierform;
b) Befüllen der Gelierform mit Monomersol;
c) Polymerisieren der Monomerlösung;
d) Altem des in Schritt c) entstandenen Gels zur Bildung von Poren;
e) Ausfüllen des in Schritt d) entstandenen Totvolumens mit weiterem Monomersol und Wiederholung der Schritte c) bis d),
wobei Schritt e) ein- oder mehrfach ausgeführt werden kann.

In einer bevorzugten Ausführungsform wird zur Herstellung der monolithischen porösen Formkörper ein Sol-Gel-Verfahren verwendet, bei dem in Schritt e) zunächst auf der Oberfläche des gealterten Gels ein pH-Gradient ausgebildet wird, damit sich das nachgefüllte Monomersol homogen mit dem bereits gealterten Gel verbindet.

In einer weiteren bevorzugten Ausführungsform unterscheidet sich das Monomersol, mit dem in Schritt e) nachgefüllt wird, in seiner Zusammensetzung von dem Monomersol aus Schritt b).

In einer bevorzugten Ausführungsform weist die in Schritt a) bereitgestellte Gelierform einen Innendurchmesser zwischen 1 mm bis 100 mm auf.

Das erfindungsgemäße Verfahren eignet sich zur Herstellung poröser monolithischer Formkörper aus Monomersolen, die im Verlauf des Herstellungsprozesses schrumpfen.

Zur Herstellung der Formkörper, können verschiedene dem Fachmann bekannte Verfahren, wie Verfahren zur z.B. radikalischen Polymerisation oder auch Sol-Gel-Verfahren, eingesetzt werden. Die Lösungen, die die Ausgangssubstanzen zur Herstellung der Monolithen enthalten, werden erfindungsgemäß, unabhängig von der Art wie sie polymerisiert oder geliert werden, als Monomersol bezeichnet.

Das erfindungsgemäße Verfahren eignet sich insbesondere zur Herstellung anorganischer poröser monolithischer Formkörper nach einem Sol-Gel Prozeß. In WO 95/03256 und besonders in WO 98/29350 werden erfindungsgemäß bevorzugte Verfahren zur Herstellung anorganischer monolithischer Formkörper nach einem Sol-Gel Prozeß offenbart. Diese Materialien enthalten Mesoporen mit einem Durchmesser zwischen 2 und 100 nm und Makroporen mit einem mittleren Durchmesser von über 0,1 µm und sind somit für eine chromatographische Anwendung besonders gut geeignet.

Die Herstellung dieser Formkörper kann beispielsweise erfolgen, indem man in einer Gelierform Siliciumalkoholat unter sauren Bedingungen in Gegenwart einer porenbildenden Phase, z.B. einer wässrigen Lösung eines organischen Polymers, zu einem porösen Gelkörper hydrolysiert und danach die porenbildene Substanz abtrennt und das Gel brennt. Besonders durch die abschließende Alterung des Gels kommt es zu einer Veränderung der Gelstruktur und zum Schrumpfen des Gels. Dadurch entsteht ein Totvolumen zwischen der Gelierform und dem Formkörper.

In dem erfindungsgemäßen Verfahren wird nun das Totvolumen zwischen Gelierform und Formkörper mit Monomersol aufgefüllt. Die Gelierform mit Formkörper und Monomersol wird dann erneut den verschiedenen Schritten eines Herstellverfahrens, wie z.B. in WO 95/03256 oder WO 98/29350 beschrieben, unterzogen. Damit sich das nachträglich eingefüllte Monomersol möglichst homogen mit dem bereits vorhandenen Monolithen verbindet, wird bevorzugt der durch die Alterung erzeugte basische pH-Wert durch die Schaffung eines pH-Gradienten ausgeglichen.

Unter Schaffung eines pH-Gradienten wird erfindungsgemäß verstanden, daß mindestens auf der Außenseite der gealterten Gelkörper der pH-Wert wieder auf einen Wert gleich oder bevorzugt kleiner pH 7 gebracht wird. Bevorzugt wird der pH-Wert des im Anschluß zu verwendenden Monomersols eingestellt. Genauso ist es möglich, aber nicht notwendig, den gesamten Formkörper auf diesen pH-Wert einzustellen. Die Einstellung des pH-Gradienten kann beispielsweise durch Waschung mit Wasser oder bevorzugt mit einer Säure oder einem Puffer mit entsprechendem pH-Wert erfolgen.

Natürlich tritt auch bei der zweiten Alterung eine Schrumpfung des hinzugefügten Gels auf. Aus diesem Grund kann es notwendig sein, ein oder mehrere weitere Male Monomersol zuzugeben, dieses auszugelieren und erneut eine Alterung durchzuführen.

Nachdem die Gelierform, in der polymerisiert wurde, ausreichend mit dem Formkörper gefüllt ist und das durch die Schrumpfung entstandene Totvolumen ausgefüllt wurde, erhält man einen Formkörper, der für chromatographische Trennungen geeignet ist und direkt in seiner Gelierform verbleiben kann.

Für das erfindungsgemäße Verfahren ist zu beachten, daß homogene Formkörper nur dann entstehen, wenn das Monomersol bei jeder Zugabe die gleiche Zusammensetzung aufweist und auch das Gelieren und Altern unter vergleichbaren Bedingungen erfolgt. Wird zum Auffüllen des Totvolumens ein Monomersol anderer Zusammensetzung gewählt, so werden Formkörper erzeugt, deren Kern sich von den später aufgefüllten Außenbereichen beispielsweise in der Porenverteilung unterscheidet. Für chromatographische Trennungen sind jedoch homogene Formkörper bevorzugt.

Somit ergeben sich für erfindungsgemäß hergestellte Formkörper beispielsweise folgende Zusammensetzungen:
1. Mischung eines porösen Monolithen (innen) mit einer zweiten porösen (gleichartigen) Schicht (außen);
2. Mischung eines porösen Monolithen (innen) mit einer zweiten unporösen Schicht (außen);
3. Mischung eines porösen anorganischen Monolithen (innen) mit einer zweiten porösen organischen Polymer-Schicht (außen);
4. Mischung eines porösen anorganischen Monolithen mit einer zweiten unporösen organischen Polymer-Schicht.

Als poröse monolithische Formkörper im Sinne der vorliegenden Erfindung gelten demnach auch Formkörper, deren innerer Teil aus einem porösen und deren äußere Schicht aus einem unporösen Material besteht.

Es lassen sich so auch unterschiedliche Herstellverfahren kombinieren. Beispielsweise kann die Herstellung des ersten, inneren Formkörpers entsprechend dem oben geschilderten Sol-Gel-Prozeß erfolgen, während die äußere Schicht, die beim Nachfüllen gebildet wird durch radikalische Polymerisation entsteht.

Zur Herstellung eines anorganischen Monolithen mit poröser Innenstruktur und unporöser Außenschicht läßt sich beispielsweise die Innenstruktur nach oben beschriebene Sol-Gel-Verfahren erzeugen, während die Außenschicht ausgehend von Monomersolen aus reinem Tetramethoxysilan mit Säure oder Wasser oder auch aus Monomersolen mit Ormoceren (Polykieselsäuren oder Polysiloxanen) hergestellt wird.

Als Gelierform wird erfindungsgemäß die Form bezeichnet, in die die monolithischen Formkörper während der erfindungsgemäßen Herstellung vollständig, d.h. paßgenau ohne Totvolumen, einpolymerisiert werden. Da die erfindungsgemäß einpolymerisierten Formkörper bevorzugt als Trennsäulen für die Chromatographie eingesetzt werden, stellt die Gelierform zugleich die Ummantelung der Chromatographiesäule dar. Es ist erfindungsgemäß nicht mehr notwendig, die Formkörper für einen chromatographischen Einsatz aus der Gelierform zu entfernen und mit einer neuen Ummantelung zu versehen.

Die Gelierform besitzt daher typischerweise eine für Kapillaren, analytische oder präparative Chromatographiesäulen übliche Größe und Form.

Sie kann aus Metall oder bevorzugt, aus Kunststoff, Keramik, Glas oder anderen Silika-Materialien, wie z.B. Fused Silica, bestehen. Der Fachmann ist in der Lage, die Auswahl aus diesen Materialien aufgrund der Reaktionsbedingungen und der eingesetzten Reaktanden zu treffen.

Erfindungsgemäß bedeutet vollständig, d.h. paßgenau ohne Totvolumen einpolymerisiert, daß die Gelierform derart von dem Formkörper ausgefüllt wird, daß die chromatographische Trennleistung nicht mehr von Hohlräumen beeinträchtigt wird, die in den Randbereichen durch Schrumpfungsprozesse entstehen. Natürlich können bei dem erfindungsgemäßen Verfahren die Enden der Gelierform mit Stopfen oder Platzhaltern anderer Art versehen sein, so dass der Monolith nach dem Einpolymerisieren und Entfernen der Stopfen nicht passgenau mit der Gelierform endet. Ein Überstehen der Gelierform an den Enden kann insbesondere zum Einbringen von Filter- oder Dichtungselementen oder zum Anschluß von Elutionsmittelzu- und ablauf vorteilhaft sein. Demnach kann auch eine erfindungsgemäß über den Querschnitt der Gelierform vollständig mit monolithischem Sorbens gefüllte Gelierform an den Enden Aussparungen aufweisen.

Das erfindungsgemäße Verfahren kann zur Herstellung von Chromatographiesäulen mit Innendurchmessern von 200 µm bis 200 mm, bevorzugt zwischen 1 mm bis 100 mm, eingesetzt werden. Bei dünnen Rohren oder Kapillaren von einem Durchmesser bis zu 5 mm ist es zumeist ausreichend, das nach der ersten Alterung entstehende Totvolumen einmal mit neuem Monomersol auszufüllen. Bei dickeren Rohren kann drei- oder viermaliges Nachfüllen notwendig sein.

Zum Einsatz der erfindungsgemäßen in die Gelierform einpolymerisierten Formkörper für chromatographische Zwecke, wird die Gelierform zumeist mit den entsprechenden Filter- oder Dichtungselementen sowie Anschlüssen für Elutionsmittel versehen.

Mithilfe des erfindungsgemäßen Verfahrens können erstmals monolithische homogene poröse Formkörper hergestellt werden, die ihre Gelierform vollständig ausfüllen. Die Formkörper können für chromatographische Zwecke in der Gelierform verbleiben und zeigen bei der Verwendung von einheitlichen Monomerlösungen eine ebenso homogene Porenstruktur und ebenso gute Trennleistungen wie nachträglich ummantelte Formkörper, die ohne Mehrfachfüllung hergestellt wurden. Durch das erfindungsgemäße Verfahren wird daher die Herstellung der monolithischen Formkörper für chromatographische Zwecke stark vereinfacht.

Kapillaren, die nach dem erfindungsgemäßen Verfahren hergestellt werden, zeigen im Durchschnitt wesentlich bessere Trennleistungen als Kapillaren aus dem Stand der Technik. Grund dafür ist, daß durch Schrumpfungsprozesse unmerklich auftretende Totvolumina problemlos ausgeglichen werden können.

Weiterhin bietet das erfindungsgemäße Verfahren die Möglichkeit durch Nachfüllen mit einem unterschiedlichen Monomersol Komposit-Materialien herzustellen. Diese Materialien können je nach Beschaffenheit des inneren Monolithen und der äußeren Schicht unterschiedliche Eigenschaften aufweisen.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

1.
   Zu einer Lösung von 0,7 g Polyethylenglycol 10.000 in 10ml einer 0,001 molaren Essigsäure werden 5ml Tetramethoxysilan (TMOS) addiert und das Reaktionsgemisch zur Hydrolyse bei 40°C gerührt. Nach einigen Minuten bildet sich eine klare Lösung, die nach 20 Minuten Rühren bei 40°C in eine Superformance^{®} Glassäule (Merck KGaA, Deutschland) mit einem Innendurchmesser von 5 cm überführt wird. Nach 40 Minuten unter thermostatisierten Bedingungen (40°C) verfestigt sich die Reaktionslösung. Nachdem das gebildeten Gel 20 Stunden bei konstanter Temperatur gealtert ist, kann eine Schrumpfung des Monolithen von mehr als 10% festgestellt werden.
   Wegen des Zwischenraum, der sich zwischen dem Monolithen und der Säulenwand gebildet hat, ist es nicht möglich, den Monolithen für eine Verwendung als Trennmaterial direkt einzusetzen.
   Das wird auch dadurch deutlich, dass es leicht möglich ist, den Monolithen aus dem Glasrohr zu entfernen. Er wird zur weiteren Alterung in einer Kunststoffschale während 72 Stunden in einer 0,1 molaren Ammoniaklösung bei 40°C gelagert, die jeweils nach 24 Stunden erneuert wird. Der pH der Ammoniak-Lösung beträgt ca. 10.
   Um den feuchten Stab für eine Oberflächenreaktion vorzubereiten, wird zur pH Änderung der äußeren Oberfläche der Monolith für 1 Stunde in 0,001 molarer Essigsäure gelagert und sofort zentriert in der Superformance^{®} Säule mit einem Innendurchmesser von 5cm fixiert. Der Zwischenraum zwischen Monolith und Glaswand wird mit einer Lösung, die wie bereits zuvor beschrieben hergestellt wurde, aufgefüllt und bei 40°C ausgelieren gelassen. Das sich bildende Gel kann aufgrund des gleich pH Wertes im äußeren Bereiches des Erstmonolithen eine Verbindung mit der Oberfläche eingehen und einen neuen kompakten Stab bilden. Dieser Monolith ist nach der weiteren Alterung von 20 Stunden bei 40°C nicht mehr aus dem Glasrohr.zu entfernen. Zur Alterung wird die mit dem Monolithen gefüllte Glassäule in einer Kunststoffschale für 72 Stunden in 0,1 molarer Ammoniaklösung (der pH betrug ca. 10) bei 40°C gelagert, die jeweils nach 24 Stunden erneuert wird. Nach dieser Zeit werden die flexiblen Endstücke der Superformance^{®} Säule bis auf die Enden des Monolithen im Inneren des Glaskörpers gedreht und der poröse Monolith mit Wasser bei einem Fluss von 0,5ml/Minute von Rückständen freigespült.
2. Es wird zu einer Lösung von 0,7g Polyethylenglycol 10.000 in 10ml einer 0,001 molaren Essigsäure 5ml Tetramethoxysilan (TMOS) addiert und das Reaktionsgemisch zur Hydrolyse bei 40°C gerührt. Nach einigen Minuten bildet sich eine klare Lösung, die nach 20 Minuten Rühren bei 40°C in eine Superformance^{®} (Merck KGaA) Glassäule mit einem Innendurchmesser von 5cm überführt wird. Nach 40 Minuten unter thermostatisierten Bedingungen (40°C) verfestigte sich die Reaktionslösung. Nachdem das gebildeten Gel 20 Stunden bei konstanter Temperatur gealtert ist, kann eine Schrumpfung des Monolithen von mehr als 10% festgestellt werden. Wegen des Zwischenraum, der sich zwischen dem Monolithen und der Säulenwand gebildet hat, ist es nicht möglich den Monolithen für eine Verwendung als Trennmaterial direkt einzusetzen.
   Zur weiteren Alterung werden die flexiblen Endstücke der Superformance^{®} Säule bis kurz vor die Enden des Monolithen im Inneren des Glaskörpers gedreht und der Spalt zwischen Monolith und Glaswand mit Hilfe einer Pumpe mit einer 0,1 molaren Ammoniaklösung gefüllt und während 72 Stunden bei 40°C gelagert. Die 0,1 molare Ammoniaklösung wird jeweils nach 24 Stunden erneuert. Der pH der Ammoniak-Lösung beträgt ca. 10. Um den feuchten Stab für eine Oberflächenreaktion vorzubereiten, wird zur pH-Änderung in den Spalt eine 0,001 molaren Essigsäure gepumpt und für eine Stunde bei 40°C stehen gelassen.
   Nach dieser Zeit wird in den Zwischenraum zwischen Monolith und Glaswand eine Lösung, die wie bereits zuvor beschrieben hergestellt wurde, gepumpt und bei 40°C ausgelieren gelassen. Dabei ist darauf zu achten, dass keine Reaktionslösung in den Schläuchen der Pumpe verbleibt. Das sich bildende Gel kann aufgrund des gleich pH Wertes im äußeren Bereiches des Erstmonolithen eine Verbindung mit der Oberfläche eingehen und einen neuen kompakten Stab bilden. Der Stab ist nach der Alterung von 20 Stunden bei 40°C nicht mehr aus dem Glasrohr zu entfernen. Zur weiteren Alterung werden die verstellbaren Endstücke der Superformance^{®} Säule bis auf die Enden des Monolithen im Inneren des Glaskörpers gedreht und der poröse Monolith zur weiteren Alterung langsam mit 20ml einer 0,1 molare Ammoniaklösung (der pH betrug ca. 10) bei 40°C durchpumpt. Die Pumpe wird dann gestoppt und die Lösung in den Poren des Monolithen belassen. Dieser Vorgang wird jeweils nach 24 Stunden wiederholt. Anschließend wird der Monolith mit Wasser bei einem Fluss von 0,5 ml/Minute von Rückständen freigespült.

## Patentansprüche

1. Verfahren zur Herstellung von monolithischen porösen Formkörpern, die ihre Gelierform vollständig ausfüllen, **gekennzeichnet durch** folgende Verfahrensschritte:
a) Bereitstellen einer Gelierform;
b) Befüllen der Gelierform mit Monomersol;
c) Polymerisieren der Monomerlösung;
d) Altem des in Schritt c) entstandenen Gels zur Bildung von Poren;
e) Ausfüllen des in Schritt d) entstandenen Totvolumens mit weiterem Monomersol und Wiederholung der Schritte c) bis d);
wobei Schritt e) ein oder mehrfach ausgeführt werden kann.

2. Verfahren nach Anspruch 1, **dadurch gekennzeichnet, daß** zur Herstellung anorganischer Monolithen nach einem Sol-Gel-Verfahren in Schritt e) zunächst auf der Oberfläche des gealterten Gels ein pH-Gradient ausgebildet wird.

3. Verfahren nach Anspruch 1 oder 2, **dadurch gekennzeichnet, daß** sich das Monomersol, mit dem in Schritt e) nachgefüllt wird, in seiner Zusammensetzung von dem Monomersol aus Schritt b) unterscheidet.

4. Verfahren nach einem oder mehreren der Ansprüche 1 bis 3, **dadurch gekennzeichnet, dass** die in Schritt a) bereitgestellte Gelierform einen Innendurchmesser zwischen 1 mm bis 100 mm aufweist.

## Claims

1. Process for the production of monolithic porous mouldings which completely fill their gelation mould, **characterised by** the following process steps:
a) provision of a gelation mould;
b) filling of the gelation mould with monomer sol;
c) polymerisation of the monomer solution;
d) ageing of the gel formed in step c) to form pores;
e) filling of the dead space formed in step d) with further monomer sol, and repetition of steps c) to d),
where step e) can be carried out one or more times.

2. Process according to Claim 1, **characterised in that**, for the production of inorganic monoliths by a sol-gel process, a pH gradient is firstly formed on the surface of the aged gel in step e).

3. Process according to Claim 1 or 2, **characterised in that** the monomer sol subsequently introduced in step e) differs in composition from the monomer sol from step b).

4. Process according to one or more of Claims 1 to 3, **characterised in that** the gelation mould provided in step a) has an internal diameter of between 1 mm and 100 mm.

## Revendications

1. Procédé pour la production de moulages poreux monolithiques qui remplissent complètement leur moule de gélification, **caractérisé par** les étapes de procédé qui suivent :
a) fourniture d'un moule de gélification ;
b) remplissage du moule de gélification avec un sol monomère ;
c) polymérisation de la solution de monomère ;
d) vieillissement du gel formé au cours de l'étape c) pour former des pores ;
e) remplissage de l'espace mort formé au cours de l'étape d) avec du sol monomère supplémentaire, et répétition des étapes c) à d),
dans lequel l'étape e) peut être mise en oeuvre une ou plusieurs fois.

2. Procédé selon la revendication 1, **caractérisé en ce que**, pour la production de monolithes inorganiques par procédé sol-gel, un gradient de pH est tout d'abord formé sur la surface du gel vieilli au cours de l'étape e).

3. Procédé selon la revendication 1 ou 2, **caractérisé en ce que** le sol monomère introduit ensuite au cours de l'étape e) diffère en composition du sol monomère provenant de l'étape b).

4. Procédé selon une ou plusieurs des revendications 1 à 3, **caractérisé en ce que** le moule de gélification fourni au cours de l'étape a) a un diamètre interne de entre 1 mm et 100 mm.
